(19) Europäisches Patentamt
European Patent Office
Office européen des brevets

(11) **EP 2 381 003 B1**

(12) **EUROPEAN PATENT SPECIFICATION**

(45) Date of publication and mention
of the grant of the patent:
**24.07.2019 Bulletin 2019/30**

(21) Application number: **10731125.0**

(22) Date of filing: **05.01.2010**

(51) Int Cl.:
*C22C 38/00* *(2006.01)*      *C22C 38/60* *(2006.01)*
*C21D 1/42* *(2006.01)*       *C22C 38/02* *(2006.01)*
*C22C 38/06* *(2006.01)*      *C22C 38/04* *(2006.01)*

(86) International application number:
**PCT/JP2010/000017**

(87) International publication number:
**WO 2010/082454 (22.07.2010 Gazette 2010/29)**

(54) **STEEL FOR HIGH-FREQUENCY HARDENING**

STAHL FÜR HOCHFREQUENZHÄRTUNG

ACIER POUR DURCISSEMENT À HAUTE FRÉQUENCE

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**

(30) Priority: **16.01.2009 JP 2009007757**

(43) Date of publication of application:
**26.10.2011 Bulletin 2011/43**

(73) Proprietor: **Nippon Steel Corporation
Tokyo (JP)**

(72) Inventors:
• **SAITOH, Hajime**
**Tokyo 100-8071 (JP)**
• **AISO, Toshiharu**
**Tokyo 100-8071 (JP)**
• **HASHIMURA, Masayuki**
**Tokyo 100-8071 (JP)**
• **MIZUNO, Atsushi**
**Tokyo 100-8071 (JP)**
• **KUBOTA, Manabu**
**Tokyo 100-8071 (JP)**

(74) Representative: **Vossius & Partner
Patentanwälte Rechtsanwälte mbB
Siebertstrasse 3
81675 München (DE)**

(56) References cited:
**WO-A1-2009/001792      WO-A1-2011/040587
JP-A- 11 029 836        JP-A- 2001 342 539
JP-A- 2001 342 539      JP-A- 2005 133 201
JP-A- 2006 028 599**

• **Satyendra: "Nitrogen in Steels | ispatguru.com", ,
23 May 2013 (2013-05-23), XP055435468,
Retrieved from the Internet:
URL:http://ispatguru.com/nitrogen-in-steel s/
[retrieved on 2017-12-15]**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

TECHNICAL FIELD

The present invention relates to a steel for induction hardening (inductive quenching) having excellent machinability. More particularly, the present invention relates to a steel for induction hardening that is used for gear wheels, parts of vehicles, such as a Continuously Variable Transmission (CVT) and a Constant Velocity Joint (CVJ), and the like.

The present application claims priority on Japanese Patent Application No. 2009-007757, filed on January 16, 2009.

BACKGROUND ART

Conventionally, gear wheels for vehicles are generally subjected to a surface hardening treatment before been used. As a surface hardening method, carburization, nitriding, and induction hardening (inductive quenching) are employed. Among these, "carburization" aims to harden a matrix with a high toughness by performing high carburization on the surface layer of a material, and is mainly applied to materials of gear wheels, parts of vehicles, such as a CVT and a CVJ, and the like for the purpose of improved fatigue strength. However, the carburization treatment is mainly a batch treatment in a gaseous atmosphere. Massive energy and costs are consumed, since, for example, heating should be performed at around 930°C and this temperature should be maintained for several hours or more. In addition, in actual operation, the treatment of carburized materials or the like is vulnerable to the problem of environmental degradation, and in addition, it is difficult to perform this treatment in-line.

For such reasons, in order to solve the foregoing problems, studies were made, aiming to obtain the intended strength characteristics only by an induction hardening treatment. This is because the induction hardening is very advantageous in terms of reduction in surface hardening treatment time, required energy, and environmental impact.

As inventions relating to the induction hardening treatment aiming to solve the foregoing problems, a proposal about a steel for induction hardening is reported, for example, in Patent Document 1. This is to provide a steel material in which the area fraction of martensite is controlled to be in a range of 70% or more with respect to a microstructure prior to an induction hardening, by limiting the Si content to be in a range of 0.50% or less and the A1 content to be in a range of 0.10% or less. According to this technique, the strength is notably improved for a certainty. However, processability, in particular, machinability is extremely degraded. Up to the present, as steel materials which are subjected to carburization in the manufacturing of parts, so-called case hardened steels such as JIS SCr420 and SCM420, in which the amount of C is about 0.2%, are used. The greatest reason to use the steel materials including a small amount of C is to ensure machinability. After these steel materials are processed into the parts, they are subjected to carburizing quenching. This results in a rise in surface hardness; and thereby, the strength of the parts is enhanced. However, in order to obtain an appropriate surface hardness for the parts which are subjected to induction hardening, it is essential to raise the amount of C of the steel material itself to be in a range of 0.4% or more. In this case, the hardness of the steel material is increased before the cutting, and thus machinability degrades. Therefore, a steel material is required that keeps good machinability even when it is hard due to an increase in the amount of C. That is, up to the present, in the technical field in which parts manufactured by carburization are subjected to induction hardening, the biggest challenge is an improvement of the machinability of the steel material.

Observing foregoing inventions aimed at raising machinability, Patent Document 2 proposed an invention that improves machinability. This is a BN free-cutting steel in which large amounts of B and N are included such as 0.0050% or more of B, and 0.007% or more of N. This technology is applicable to a low-C steel (i.e., a steel that includes C at a low content) such as JIS SUM11 which does not need strength but improves only machinability such as surface roughness. However, if large amounts of B and N are added to a middle-high-C steel (i.e., a steel that includes C at a middle or high content) which is the main object of the invention, hot brittleness becomes notably worse, and thus the manufacture of the steel materials becomes difficult. In addition, the characteristics of the steel material notably degrade in terms of toughness and fatigue strength. Therefore, this is not a suitable steel.

Patent Documents 3 and 4 are inventions that have both of machinability and fatigue strength. In Patent Document 3, the total fraction of a ferrite microstructure and a pearlite microstructure is controlled to be in a range of 90% or more by adjusting the composition, and furthermore, the maximum thickness of the ferrite structure is controlled to be in a range of 30$\mu$m. Thereby, a steel having both of machinability and fatigue strength is provided. Although there are various types of steels in which the total fraction of the ferrite microstructure and the pearlite microstructure is in a range of 90% or more, this factor itself (the controlling of the fraction of microstructures) is insufficient to improve the machinability. New improvement based on alloy elements is required. In Patent Document 4, the aspect ratio of MnS is reduced to be in a range of 10 or less, and furthermore, induction heating is performed up to the central portion of the steel material. Thereby, machinability and fatigue strength are improved. This method of improving machinability and fatigue strength by lowering the aspect ratio of MnS is a method that has conventionally been known. However, this method is insufficient, and new improvement based upon alloy elements is required. In addition, this method has the problem of limited practical use, becasue a limitation is also given to an induction hardening method.

[Patent Document 1] Japanese Unexamined Patent Application, First Publication No. 2007-131871
[Patent Document 2] Japanese Unexamined Patent Application, First Publication No. 2007-107020
[Patent Document 3] Japanese Unexamined Patent Application, First Publication No. 2006-28598
[Patent Document 4] Japanese Unexamined Patent Application, First Publication No. 2007-16271
JP 2001-342539 A deals with steel for high speed intermittent cutting.

DISCLOSURE OF THE INVENTION

Problems to be Solved by the Invention

The object of the invention is to improve the foregoing drawbacks of the conventional inventions and to provide a steel for induction hardening that has excellent machinability. In particular, the object of the invention is to convert a process of manufacturing gear wheels, parts used for vehicles such as a CVT and a CVJ, and the like, from carburizing treatment to induction hardening treatment

Means for Solving the Problems

As a result of detailed examination carried out to solve the foregoing objects, the inventors found that it is possible to improve machinability while maintaining strength by increasing the amount of A1 to be much greater than that of conventional steels and appropriately controlling the amount of A1 and the amount of N; and thereby, the present invention was completed. That is, the present invention has the following aspects.

A steel for induction hardening of the invention consists of: in terms of mass%, C: 0.40% or more to 0.75% or less; Si: 0.4% or more to 2.5% or less; Mn: 0.45% or more to 1.0% or less; S: 0.002% or more to 0.1% or less; Al: more than 0.10% to 3.0% or less; P: 0.030% or less; and N: 0.035% or less, with the remainder being Fe and inevitable impurities: wherein the following expression (1) is satisfied:

$$[\%Al] - (27/14) \times [\%N] - 0.001 > 0.10\% \qquad \text{expression (1)}$$

wherein [%Al] and [%N] represent the amounts of Al and N, respectively, in the steel in terms of mass%.

The steel for induction hardening of the invention may further include, in terms of mass%, B: 0.0004% or more to 0.005% or less.

The steel for induction hardening of the invention may further include, in terms of mass%, Ti: 0.004% or more to 0.10% or less.

The steel for induction hardening of the invention may further include, in terms of mass%, either one or both of: Cr: 0.05% or more to 1.50% or less; and Mo: 0.05% or more to 0.6% or less.

The steel for induction hardening of the invention may further include, in terms of mass%, either one or both of: Nb: 0.005% or more to 0.2% or less; and V: 0.01% or more to 1.0% or less.

The steel for induction hardening of the invention may further include, in terms of mass%, one or more elements selected from the group consisting of: Sb: 0.0005% or more to 0.0150% or less; Sn: 0.005% or more to 2.0% or less; Zn: 0.0005% or more to 0.5% or less; Te: 0.0003% or more to 0.2% or less; Bi: 0.005% or more to 0.5% or less; and Pb: 0.005% or more to 0.5% or less.

The steel for induction hardening of the invention may further include, in terms of mass%, one or two or more elements selected from the group consisting of:
Zr: 0.0003% or more to 0.005% or less; and REM: 0.0003% or more to 0.005% or less.

The steel for induction hardening of the invention may further include, in terms of mass%, either one or both of: Ni: 0.05% or more to 2.0% or less; and Cu: 0.01% or more to 2.0% or less.

Effects of the Invention

In accordance with the steel for induction hardening of the present invention, it is possible to improve the machinability while maintaining the strength of the steel for induction hardening, because the content of C is in a range of 0.40% or more to 0.75% or less, and the content of A1 is in a range of more than 0.10% to 3.0% or less.

Therefore, the present invention provides the steel that makes it possible, in particular, to convert the process of manufacturing gear wheels, parts which are used for a CVT and a CVJ for vehicles, and the like, from carburizing treatment to induction hardening treatment.

BRIEF DESCRIPTION OF THE DRAWINGS

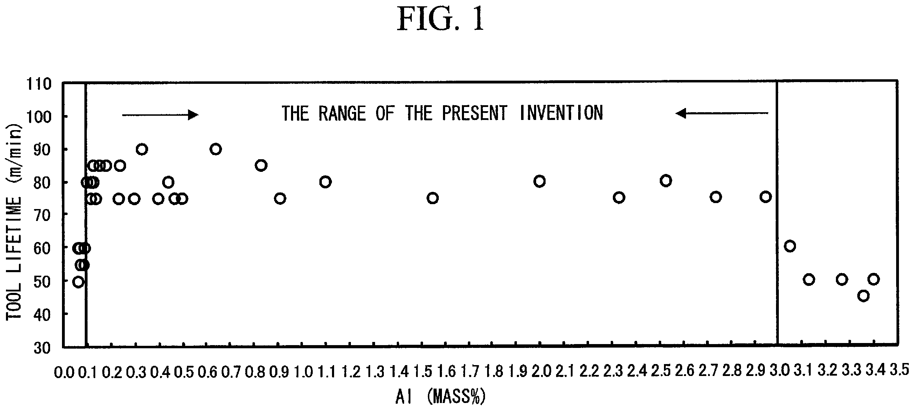

FIG. 1 is a diagram showing the relationship between the Al content and the lifetime of a steel material.

BEST MODE FOR CARRYING OUT THE INVENTION

Hereinafter, exemplary embodiments of the invention will now be described in detail.

The reason why a steel composition is limited will be described. Herein, the unit % of the content of the component represents % by mass.

C: equal to or more than 0.40% and equal to or less than 0.75%

C serves to ensure a surface hardness after induction hardening and to ensure an intended strength of steel (core part). In the case where the content of C is in a range of less than 0.40%, intended effects due to the above action cannot be obtained. Meanwhile, in the case where the content of C exceeds 0.75%, toughness degrades. This causes a manufacturing problem such as the aging cracking of a rolled steel or the like. Therefore, the content of C is set to be in a range of 0.40% or more to or 0.75% or less, and is preferably adjusted to be in a range of 0.50% or more to 0.65% or less in order to more stably ensure the above-described effects.

Al: greater than 0.10% and not greater than 3.0%

Al will be described in detail, since Al is the most important element in the steel of the invention.

A plurality of ingots were prepared by adjusting the compositions to include: C: 0.50% or more to 0.60% or less; Si: 0.002% or more to 0.80% or less; Mn: 0.50% or more to 0.9%o rless; S: 0.005% or more to 0.1% or less; Al: 0.010% or more to 3.5% or less; N: 0.001% or more to 0.035% or less; and P: 0.030% or less, with the balance being Fe and inevitable impurities. Rolled steels of $50\phi$ were manufactured by using the ingots. The compositions were adjusted in this fashion so that the hardness of the rolled steels becomes in a range approximately from 200 to 220HV Disc-like samples of $45\phi \times 15mm$ were manufactured from these materials.

These samples were subjected to a machinability test (i.e., a test method described in "METHOD OF FINDING AND SELECTING WORKPIECE MATERIAL AND TOOL MATERIAL WITHOUT ERROR" edited by Katayama Akira, published by The Nikkan Kogyo Shimbun, Ltd., Tokyo, 2007, P.27), under the conditions presented in Table 1. Holes having a total depth of 1000mm were bored in the disk-like samples at a certain drill rotation rate (m/min). In the case where a drill is not damaged during the drilling, holes having a total depth of 1000mm were bored at a faster drill rotation rate, using a new drill. This operation was carried out until a drill is damaged. And then, among the rotation rates at which the drills were not damaged, the maximum rotation rate (i.e., the maximum drilling rate (m/min) at which the total depth of the hole bored by the drill was 1000mm) was used in the evaluation of machinability. This is a test that evaluates the tool lifetime, and it can be understood that the tool is less easily damaged and the machinability of the steel is better if the maximum cutting rate is faster.

Table 1

| Drilling conditions | Drill |
|---|---|
| Drilling rate: 10 to 90m/min | $\phi$ 3mm |
| Transport: 0.25mm/rev Water soluble cutting oil was used | NACHI (trade name) HSS drill: Shape No. SD3.0 drill, available from NACHI-FUJIKOSHI CORPORATION |

The test result is presented in FIG 1. Referring to FIG. 1, it can be understood that an excellent tool lifetime can be obtained in the case where the amount of Al exceeds 0.10% and is not greater than 3.0% (in a range of more than 0.1 % to 3.0% or less).

From the above test result, the amount of Al for improving the tool lifetime is set to be in a range of more than 0.1 % to 3.0% or less.

Although the detailed reason regarding why it was possible to obtain these interesting results is unclear, the inventors examined the surface of the tool by EPMA or Auger electron spectroscopy after the cutting test. The inventors could confirm that $Al_2O_3$ was formed on the surface of the tool after the cutting even though it was not observed on the surface of a new product tool. From this, it is considered that a hard $Al_2O_3$ film was formed through the reaction of Al in the steel, which was attached to the surface of the tool during the cutting, with oxygen in the air, oxygen contained in a cutting oil, or oxygen in a homo-treatment film ($Fe_3O_4$) on the surface of a High Speed Steel (HSS) drill (The homo-treatment is also referred to as a steam treatment, and is a treatment that forms a steel oxide film having a thickness of several micrometers by heat treatment in the steam or the like to provide corrosion resistance or the like to a tool. Refer to "HANDBOOK FOR HEAT TREATMENT," edited by The Japan Society for Heat Treatment, published by The Nikkan Kogyo Shimbun, Ltd., Tokyo, 2000, P. 569).

Since $Al_2O_3$ has a hardness of about 3000 HV, $Al_2O_3$ is harder than a HSS drill steel (having a hardness of about 700 HV), and does not wear easily. In addition, generally, if a steel material is the same material (steel) as the tool, adhesion occurs in the contact portion; and thereby, the tool is vulnerable to abrasion (adhesion abrasion). In contrast, if $Al_2O_3$ is interposed between these materials, it is possible to reduce the contact between the same materials (steel); and thereby, the wear of the tool can be suppressed. Therefore, it was surmised that the lifetime of the tool was improved since the $Al_2O_3$ film prevented the adhesion abrasion.

Conventional free-cutting steel, which includes Pb, easily melts due to a rise in temperature during the cutting processing because Pb has a low melting point of about 330°C. This causes a lubricating action in the interface between the tool and cutting scraps; and thereby, adhesion is prevented. In addition, since ductility is lowered due to the melting of Pb, it is easy to cause a ductile fracture in a portion surrounding a blade edge. Therefore, machinability is improved since the deformation processing energy necessary for the cutting is decreased. However, this is not preferable in respect to health, and thus a free-cutting element, which does not include Pb, is required. In a conventional free-cutting steel, which includes S, machinability is improved due to two effects. The first effect is a lubricating action which is creaed by MnS since MnS is greatly deformed at high temperatures and is attached to the interface between the tool and the cutting scraps. The second effect is a promoting of the ductile fracture attained by the fact that MnS in a portion contacting the blade edge of the tool becomes the fracture starting point. However, since MnS is drawn in hot forging, there is a problem in that mechanical characteristics such as ductile toughness in a direction perpendicular to the forging direction are degraded.

In contrast, in the steel of the present invention, it is considered that an $Al_2O_3$ film is formed on the surface of the tool; and thereby, the wear of the tool can be suppressed.

In general, if the hardness of a steel material is higher, the life time of the tool generally decreases. However, when compared to a steel material having an equal level of hardness, the steel of the present invention has an effect of increasing the lifetime of the tool.

The amount of Al is preferably in a range of 0.11% or more to 3.0% or less. The amount of Al is more preferably in a range of 0.15% or more to 2.9% or less, and is even more preferably in a range of 0.2% or more to 1.1% or less.

This embodiment relates to a steel for induction hardening, and in general, in the induction hardening, a surface portion of the steel with a thickness of 2 to 3mm from the surface is heated at a temperature within a range of not less than $A_1$ point (i.e., a transformation temperature from the ferrite phase ($\alpha$ phase) into the austenite phase ($\gamma$ phase)), and then the steel is subjected to water-cooling. Due to this, the surface layer becomes martensite (having a hardness of about 600HV or more).

If the content of Al increases, the $A_1$ point rises. If the content of Al exceeds 3.0%, phase transformation does not occur in the induction hardening. Therefore, from the point of the induction hardening, it is necessary to set the content of Al to be in a range of 3.0% or less.

In addition, Al typically acts as a deoxidizing agent and, as a result, $Al_2O_3$ remains in the steel at a content in a range of approximately 0.001 % or more to 0.002% or less. Here, the amount of Al in $Al_2O_3$ is $27 \times 2/(27 \times 2 + 16x3)$. A portion of the remaining Al is bonded with N; and thereby, AlN is formed. It is considered that Al in AlN hardly forms a solid solution and does not easily react with oxygen in the atmosphere, oxygen in the cutting lubricant, or oxygen in the homo-treatment film ($Fe_3O_4$) on the surface of the HSS drill.

Therefore, the content of solid-solution Al (i.e., the amount of Al except for AlN) exceeds 0.1%. For this, the following relationship is satisfied:

$$[\%Al] - (27/14) \times [\%N] - 0.001 > 0.10\%,$$

Here, the bracket [ ] in the relationship indicates the content of an element (by mass percent). In addition, the above relationship is a formula that can be obtained on the assumption that all the amount of N in the steel is bonded with Al due to heat treatments or the like performed in the manufacture of the steel.

Si: equal to or more than 0.4% and equal to or less than 2.5%

Si is an element that is added as a deoxidizing agent in steelmaking as well as improving the strength of a steel material, and the content of Si is adjusted according to the required strength. However, the content of Si is required to be in a range of 0.4% or more in order to effectuate the deoxidizing action. Meanwhile, in the case where the content of Si exceeds 2.5%, the toughness and the ductility of the steel material are lowered and, at the same time, the machinability of the steel material is lowered because a number of hard inclusions are generated inside the steel material.

According to the present invention, the amount of Si is in a range of 0.4% or more to 2.5% or less, and is preferably in a range of 0.5% or more to 2.2% or less. If the amount of Si is set to be in a range of 0.6% or more to 2.1% or less, excellent strength is attained. If the amount of Si is set to be in a range of 0.8% or more to 2.0% or less, more excellent strength is attained.

Mn: equal to or more than 0.45% and equal to or less than 1.0%

Similar to Si, Mn is an element that improves the strength of the steel material, and the content of Mn is adjusted according to the required strength. Therefore, it is required to ensure the content of Mn in a range of 0.20% or more in order to effectuate this action. However, in the case where the content of Mn exceeds 2.0%, hardenability is raised excessively. Thus, in the manufacture of the material, the forming of a bainite microstructure or a martensite-austenite constituent is promoted; and thereby, processability is lowered. According to the present invention, the amount of Mn is set to be in a range of 0.45% or more to 1.0% or less.

In the case where the shape of a part is formed by cutting the steel of the present embodiment and then the part is subjected to induction hardening, it is preferred that the steel be relatively soft in processes up to the cutting process and the steel be hardened to have an intended hardness by the induction hardening. In order to realize such excellent processability, the content of Mn is set to be

in a range of 0.45% or more to 1.0% or less.

S: equal to or more than 0.002% and equal to or less than 0.1%

It is required to include S at a content in a range of 0.002% or more in order to ensure the minimum machinability. In the case where the content of S exceeds 0.1%, toughness or fatigue strength is caused to degrade. Therefore, the content of S is set to be in a range of 0.002% or more to 0.1% or less. In the case of being used for gear wheels, the content of S is, preferably, in a range of 0.005 or more to 0.06% or less and, more preferably, in a range of 0.01 or more to 0.05% or less.

P: 0.030% or less

P serves to degrade the toughness of a hardened layer. In particular, in the case where the content of P exceeds 0.030%, toughness is caused to notably degrade. Therefore, the content of P is set to be in a range of 0.030% or less. The content of P is set to be, preferably, in a range of 0.0001 % or more to 0.030% or less and, more preferably, in a range of 0.0001% or more to 0.020% or less.

N: 0.035% or less

In the case where the addition amount of N exceeds 0.035%, it leads to notable degradation in terms of hot brittleness, and this makes it extremely difficult to manufacture a rolled steel. Therefore, the content of N is limited to be in a range of 0.035% or less.

In addition, N reacts with Al to form AlN; and thereby, N has an effect to suppress the coarsening of crystal grains. In general, it is difficult to form such large crystal grains via induction heating because the heating time is extremely short unlike a typical heating in a heat treatment furnace. However, in the case where it is intended to positively promote the refining of crystal grains, it is preferred that the content of N be set to be in a range of 0.0001% or more to 0.035% or less. More preferably, N is added at an amount in a range of approximately 0.001 % or more to 0.015% or less. In addition, it is even more preferred that the amount of N be set to be in a range of approximately 0.002% or more to 0.007% or less.

It is preferred that the steel of the present invention further include the elements, which will be mentioned below, according to the necessity.

B: equal to or more than 0.0004% and equal to or less than 0.005%

B is an element that is important in two points. One point relates to an action that provides hardenability to the steel. In the case where the amount of B is in a range of 0.0004% or more, B sufficiently segregates in austenite grain boundaries; and thereby, hardenability is developed. In addition, B is practical in terms of economy, since a very small amount of B can develop the hardenability and the cost of raw materials of B is inexpensive. The other point relates to an action that raises the strength of crystal grain boundaries. If the surface layer is hardened via induction hardening, it becomes brittle and fractures in the crystal grain boundaries. B serves to prevent this embrittlement. Even in this case, it is required that B sufficiently segregates across the austenite grain boundaries; and therefore, it is necessary to add B at a content in a range of 0.0004% or more. In the case where the added amount of B exceeds 0.005%, the steel material becomes brittle instead. Therefore, the amount of B is set to be in a range of 0.0004% or more to 0.005% or less.

Particularly, in the steel of the present invention, since the content of Al exceeds 0.1%, BN is rarely formed; and therefore, the above-described actions and effects of B are easy to obtain.

The content of B is, preferably, in a range of 0.0005 or more to 0.004% or less and, more preferably, in a range of 0.001% or more to 0.0035% or less. In this case, a steel can be realized which has excellent hardenability as well as excellent mechanical characteristics.

Ti: equal to or more than 0.004% and equal to or less than 0.10%

Ti is an element that is important in two points. One point relates to an action that refines the diameter of crystal grains after induction heating. The other point relates to an action that prevents a decrease in the amount of solid-solution B due to the forming of BN, by segregating N in the form of TiN. Typically, in the latter point, the addition amount of Ti is required to be 3.43 times that of N. However, since the steel of the present invention includes a great amount of Al, such an amount of Ti is not necessary. In the case where the content of Ti is in a range of less than 0.004%, both the effects are insufficient. Meanwhile, in the case where the content of Ti exceeds 0.10%, coarse and large Ti inclusions are formed and act as the starting point of fatigue fracture. Therefore, the content of Ti is set to be in a range of 0.004% or more to 0.10% or less.

The content of Ti is, preferably, in a range of 0.005% or more to 0.08% or less and, more preferably, in a range of 0.01% or more to 0.03% or less. In this case, the effect of improving the hardenability due to solid-solution B can be effectively utilized, and in addition, the crystal grains can be refined.

Either one or both of Cr: equal to or more than 0.05% and equal to or less than 1.50%, and Mo: equal to or more than 0.05% and equal to or less than 0.6%

Cr and Mo are elements that improve the strength of the steel material, and may be included in a certain amount according to the required strength and the size of parts.

However, in the case where the content of Cr is in a range of less than 0.05%, it is impossible to obtain the intended effects of the above-described actions. Meanwhile, in the case where the content of Cr exceeds 1.50%, hardenability is raised excessively. Thus, in the manufacture of a material (steel), the forming of a bainite microstructure or a martensite-austenite constituent is promoted; and thereby, processability is lowered. Therefore, if added, the amount of Cr is set to be in a range of 0.05% or more to 1.50% or less. In particular, in the case where it is required to easily melt cementite during induction heating so as to uniformize solid-solution C, it is preferable that the content of Cr be in a range of 0.05% or more to 0.2% or less.

The effect cannot be obtained in the case where the amount of Mo is in a range of less than 0.05%. Meanwhile, in the case where the content of Mo exceeds 0.6%, hardenability is raised excessively. Thus, in the manufacture of the material (steel), the forming of a bainite structure or a martensite-austenite constituent is promoted; and thereby, processability is lowered. Therefore, if added, the amount of Mo is set to be in a range of 0.05% or more to 0.6% or less.

In an attempt to improve the strength of the steel material, either one or both of Cr and Mo may be added, since Cr and Mo perform the common action.

Either one or both of Nb: equal to or more than 0.005% and equal to or less than 0.2%, and V: equal to or more than 0.01% and equal to or less than 1.0%

Carbonitrides of Nb and V precipitate in the steel, and these carbonitrides have a pinning property to fix crystal grain boundaries; and thereby, Nb and V serve to refine crystal grains. This results in a rise in the strength of the crystal grain boundaries.

In the case where the amount of Nb is in a range of less than 0.005%, the amount of precipitates is small; and therefore, the action of suppressing the growth of grains is insufficient. Meanwhile, in the case where the amount of Nb exceeds 0.2%, the hot brittleness of the steel increases, and this makes it difficult to manufacture the steel. Therefore, the amount of Nb is set to be in a range of 0.005% or more to 0.2% or less.

In the case where the amount of V is in a range of less than 0.01%, the amount of precipitates is small; and therefore, the action of suppressing the growth of grains is insufficient. Meanwhile, in the case where the amount of V exceeds 1.0%, the hot brittleness of the steel increases, and this makes it difficult to manufacture the steel. Therefore, the amount of V is set to be in a range of 0.01% or more to 1.0% or less.

Either one or both of Nb and V may be added, since Nb and V perform the same action.

Either one of both of Ni: equal to or more than 0.05% and equal to or less than 2.0%, and Cu: equal to or more than 0.01% and equal to or less than 2.0%

Both of Ni and Cu are elements that improve the strength of the steel material, and may be included in a certain amount according to the required strength and the size of parts.

However, in the case where the content of Ni is in a range of less than 0.05%, it is impossible to obtain the intended effects of the above-described actions. Meanwhile, in the case where the content of Ni exceeds 2.0%, hardenability is raised excessively. Thus, in the manufacture of a material (steel), the forming of a bainite structure or a martensite-austenite constituent is promoted; and thereby, processability is lowered. Therefore, the amount of Ni is set to be in a range of 0.05% or more to 2.0% or less.

The intended effects of the above-described actions cannot be obtained in the case where the content of Cu is in a range of less than 0.01%. Meanwhile, in the case where the content of Cu exceeds 2.0%, hardenability is raised excessively. Thus, in the manufacture of the material (steel), the forming of a bainite structure or a martensite-austenite constituent is promoted; and thereby, processability is lowered. Therefore, the amount of Cu is set to be in a range of 0.01% or more to 2.0% or less. In addition, in case of including Cu, it is preferred that Ni be also added at an amount half as large as that of Cu, because Cu also has the problem of causing hot brittleness.

In addition, in the case of improving machinability, one or two elements selected from the group consisting of: Sb: equal to or more than 0.0005% and equal to or less than 0.0150%; Sn: equal to or more than 0.005% and equal to or less than 2.0%; Zn: equal to or more than 0.0005% and equal to or less than 0.5%; Te: equal to or more than 0.0003% and equal to or less than 0.2%; Bi: equal to or more than 0.005% and equal to or less than 0.5%; and Pb: equal to or more than 0.005% and equal to or less than 0.5% may be added in addition to the respective components as described above.

Sb: equal to or more than 0.0005% and equal to or less than 0.0150%

Sb makes ferrite brittle appropriately; and due to this action, Sb serves to improve machinability. In the case where the content of Sb is in a range of less than 0.0005%, the effect cannot be exhibited. In addition, in the case where the content of Sb exceeds 0.0150%, the macrosegregation of Sb becomes excessive, and this makes it difficult to manufacture the steel. Therefore, if Sb is added, the content of Sb is set to be in a range of 0.0005% or more to 0.0150% or less.

Sn: equal to or more than 0.005% and equal to or less than 2.0%

Sn makes ferrite brittle; and due to this action, Sn has effects of increasing tool lifetime and improving surface roughness. However, in the case where the content of Sn is in a range of less than 0.005%, those effects cannot be exhibited. In addition, in the case where the content of Sn exceeds 2.0%, the manufacture of the steel becomes difficult. Therefore, if Sn is added, the content of Sn is set to be in a range of 0.005% or more to 2.0% or less.

Zn: equal to or more than 0.0005% and equal to or less than 0.5%

Zn makes ferrite brittle; and due to this action, Zn has effects of increasing tool lifetime and improving surface roughness. However, in the case where the content of Zn is in a range of less than 0.0005%, those effects cannot be exhibited. In addition, in the case where the content of Zn exceeds 0.5%, the manufacture of the steel becomes difficult. Therefore, if Zn is added, the content of Zn is set to be in a range of 0.0005% or more to 0.5% or less.

Te: equal to or more than 0.0003% and equal to or less than 0.2%

Te is an element that improves machinability. In addition, Te formes MnTe, and Te coexists with MnS. Thereby, Te lowers the deformability of MnS; and due to this action, Te serves to suppress the drawing of a MnS shape. In this way, Te is an element that is effective in reducing anisotropy. However, in the case where the content of Te is in a range of less than 0.0003%, those effects cannot be exhibited. In addition, in the case where the content of Te exceeds 0.2%, not only do those effects become saturated but also the hot ductility is lowered, and this becomes the cause of faults. Therefore, if Te is added, the content of Te is set to be in a range of 0.0003% or more to 0.2% or less.

Bi: equal to or more than 0.005% and equal to or less than 0.5%

Bi is an element that improves machinability. However, in the case where the content of Bi is in a range of less than 0.005%, that effect cannot be obtained. In addition, in the case where the content of Bi exceeds 0.5%, not only does the effect of improving machinability become saturated but also the hot ductility is lowered, and this becomes the cause of faults. Therefore, if Bi is added, the content of Bi is set to be in a range of 0.005% or more to 0.5% or less.

Pb: equal to or more than 0.005% and equal to or less than 0.5%

Pb is an element that improves machinability. However, in the case where the content of Pb is in a range of less than 0.005%, that effect is not confirmed. In addition, in the case where the content of Pb exceeds 0.5%, not only does the effect of improving machinability become saturated but also hot ductility is lowered, and this becomes the cause of faults. Therefore, if Pb is added, the content of Pb is set to be in a range of 0.005% o rmore to 0.5% or less.

Zr: equal to or more than 0.0003% to and equal to or less than 0.005%

Zr is also an effective element for controlling the configuration of MnS. Zr forms (Zr, Mn)S in the steel; and thereby, MnS becomes a harder compound. Therefore, drawing does not occur during the rolling, and thus it becomes possible to control the configuration. In order to control the configuration of MnS, it is necessary to include Zr at a content in a range of 0.0003% or more. Meanwhile, in the case where the content of Zr exceeds 0.005%, Zr coarsens oxides; and thereby, fatigue strength is degraded instead. Therefore, if Zr is added, the content of Zr is set to be in a range of 0.0003 or more to 0.005% or less.

REM: equal to or more than 0.0003% to and equal to or less than 0.005%

REM is also an effective element for controlling the configuration of MnS. REM forms (REM, Mn)S in the steel; and thereby, MnS becomes a harder compound. Therefore, drawing does not occur during the rolling, and thus it becomes possible to control the configuration. In order to control the configuration of MnS, it is necessary to include REM at a content in a range of 0.0003% or more. Meanwhile, in the case where the content of REM exceeds 0.005%, REM coarsens oxides; and thereby, fatigue strength is degraded against the intention. Therefore, if REM is added, the content of REM is set to be in a range of 0.0003% or more to 0.005% or less.

In addition, REM indicates a rare earth metal element, which is one or more selected from among Sc, Y, La, Ce, Pr, Nd, Pm, Sm, Eu, Gd, Tb, Dy, Ho, Er, Tm, Yb, and Lu.

The steel of the present invention can realize the above-described actions and effects in the case where it has the above described composition. Therefore, the steel of the present invention is manufactured by known methods, and manufacturing conditions thereof are not specifically limited. Typically, the steel of the present invention is a rolled steel that could be produced by controlling the composition of a slab and subjecting the slab to hot rolling or cold rolling.

Although the steel of the present invention is a steel having extremely excellent machinability, examples of utilizing the steel (i.e., processes of manufacturing products such as parts and the like using the steel) may include a case in which the shape of a part is formed by cutting a rolled steel (i.e., the steel of the present invention), and then induction hardening is performed, a case in which a rolled steel is forged, the shape of a part is formed by cutting the forged rolled steel, and then induction hardening is performed, a case in which annealing is performed prior to cutting, and the like. In addition, it is possible to further raise the hardness of the surface layer after induction hardening by performing soft nitriding prior to the induction hardening, and the steel of the present invention can be applied to such a process. Furthermore, it is possible manufacture parts from the steel by combining the above-described plurality of processes with each other.

EXAMPLES

Hereinafter, the present invention will be described in more detail with respect to Examples. However, the following Examples are not intended to limit the invention. All changes in design made in view of the intentions, which will be described later, shall fall within the technical scope of the present invention.

Below, the present invention will be described in detail with respect to Examples. Steel bars of 50$\phi$ were manufactured by melting and rolling steels presented in Tables 2 to 4.

Table 2

| Classification | Sample No. | Ingredients of steel material (% by mass) | | | | | | | | | | | | | | | | |
| --- | --- | --- | --- | --- | --- | --- | --- | --- | --- | --- | --- | --- | --- | --- | --- | --- | --- | --- |
| | | C | Si | Mn | P | S | Al | N | B | Ti | Cr | Mo | Nb | V | Ni | Cu | Pb | Other element(s) |
| Comparative Ex | 1A | 0.43 | 0.68 | 0.42 | 0.026 | 0.047 | 0.150 | 0.0023 | | | | | | | | | | |
| Comparative Ex | 1B | 0.44 | 0.71 | 0.41 | 0.025 | 0.040 | 0.108 | 0.0023 | | | | | | | | | | |
| Comparative Ex | 1C | 0.45 | 0.26 | 0.64 | 0.017 | 0.020 | 0.070 | 0.0051 | | | | | | | | | | |
| Comparative Ex | 1D | 0.35 | 0.25 | 0.65 | 0.017 | 0.017 | 0.110 | 0.0051 | | | | | | | | | | |
| | | | | | | | | | | | | | | | | | | |
| Inventive Ex | 2A | 0.50 | 0.45 | 0.53 | 0.011 | 0.013 | 0.140 | 0.0031 | | | | | | | | | 0.12 | |
| Comparative Ex | 2B | 0.50 | 0.45 | 0.53 | 0.012 | 0.015 | 0.065 | 0.0031 | | | | | | | | | 0.12 | |
| | | | | | | | | | | | | | | | | | | |
| Comparative Ex | 3A | 0.51 | 0.39 | 0.52 | 0.020 | 0.018 | 0.110 | 0.0029 | | | | | | | | | | |
| Comparative Ex | 3B | 0.53 | 0.05 | 0.70 | 0.018 | 0.052 | 0.139 | 0.0044 | | | | | | | | | | |
| Comparative Ex | 3C | 0.55 | 0.20 | 0.64 | 0.013 | 0.012 | 0.200 | 0.0060 | | | | | 0.022 | | | | | |
| Inventive Ex | 3D | 0.52 | 0.59 | 0.59 | 0.030 | 0.048 | 0.120 | 0.0062 | | | | | 0.021 | | | | | |
| Comparative Ex | 3E | 0.52 | 0.59 | 0.59 | 0.020 | 0.045 | 0.052 | 0.0062 | | | | | | | | | | |
| | | | | | | | | | | | | | | | | | | |
| Inventive Ex | 4A | 0.51 | 0.72 | 0.53 | 0.009 | 0.020 | 0.120 | 0.0050 | | | | | | | | | | Sb: 0.01 |
| Comparative Ex | 4B | 0.51 | 0.72 | 0.53 | 0.009 | 0.020 | 0.044 | 0.0050 | | | | | | | | | | |
| | 5A | | | | | | | | | | | | | | | | | |
| Comparative Ex | | 0.56 | 0.05 | 0.55 | 0.024 | 0.027 | 0.123 | 0.0071 | | | | | | | | | | Bi: 0.011 |
| Comparative Ex | 5B | 0.56 | 0.05 | 0.55 | 0.010 | 0.022 | 0.052 | 0.0130 | | | | | | | | | | Bi: 0:011 |
| | | | | | | | | | | | | | | | | | | |
| Comparative Ex | 6A | 0.65 | 0.05 | 0.39 | 0.014 | 0.022 | 1.300 | 0.0048 | | | | | | | | | | |
| Comparative Ex | 6B | 0.43 | 0.68 | 0.42 | 0.026 | 0.047 | 0.150 | 0.0023 | | | | | | | | | | |

Table 3

| Classification | Sample No. | Ingredients of steel material (% by mass) | | | | | | | | | | | | | | | | |
|---|---|---|---|---|---|---|---|---|---|---|---|---|---|---|---|---|---|---|
| | | C | Si | Mn | P | S | Al | N | B | Ti | Cr | Mo | Nb | V | Ni | Cu | Pb | Other element(s) |
| Comparative Ex | 7A | 0.55 | 0.38 | 0.68 | 0.026 | 0.032 | 0.146 | 0.0078 | | | | | | | | | | Sn: 0.05 |
| Comparative Ex | 7B | 0.55 | 0.38 | 0.68 | 0.011 | 0.027 | 0.065 | 0.0078 | | | | | | | | | | Sn: 0.05 |
| | | | | | | | | | | | | | | | | | | |
| Comparative Ex | 8A | 0.53 | 0.29 | 0.50 | 0.010 | 0.018 | 0.116 | 0.0077 | | | | 0.18 | | | | | | |
| Inventive Ex | 8B | 0.51 | 0.60 | 0.80 | 0.014 | 0.008 | 0.160 | 0.0130 | | | | | | | | | | |
| Comparative Ex | 8C | 0.59 | 0.29 | 0.61 | 0.018 | 0.013 | 0.148 | 0.0065 | | | | | | | 0.35 | 0.50 | | |
| Inventive Ex | 8D | 0.55 | 0.53 | 0.76 | 0.010 | 0.018 | 0.172 | 0.0026 | | 0.057 | | | | | | | | |
| Inventive Ex | 8E | 0.56 | 0.67 | 0.66 | 0.022 | 0.022 | 0.128 | 0.0065 | | | | | | | | | | |
| Comparative Ex | 8F | 0.59 | 0.27 | 0.63 | 0.021 | 0.011 | 0.153 | 0.0062 | 0.0025 | 0.030 | 0.46 | | | | | | | |
| Comparative Ex | 8G | 0.53 | 0.67 | 0.87 | 0.017 | 0.051 | 0.189 | 0.074 | | | | | | | | | | |
| Inventive Ex | 8H | 0.53 | 0.60 | 0.95 | 0.018 | 0.050 | 0.250 | 0.0038 | | | | | | | | | | |
| Comparative Ex | 8i | 0.59 | 0.74 | 0.43 | 0.021 | 0.051 | 0.063 | 0.0056 | | | | | | | | | | |
| Comparative Ex | 8J | 0.56 | 0.61 | 0.70 | 0.016 | 0.050 | 3.320 | 0.0071 | | | | | | | | | | |
| | | | | | | | | | | | | | | | | | | Zn: |
| Inventive Ex | 9A | 0.56 | 0.58 | 0.80 | 0.010 | 0.032 | 0.180 | 0.0043 | | | | | | | | | | 0.06 |
| Comparative Ex | 9B | 0.56 | 0.58 | 0.80 | 0.015 | 0.033 | 0.071 | 0.0043 | | | | | | | | | | Zn: 0.06 |
| | | | | | | | 0.136 | | | | | | | | | | | |
| Inventive Ex | 10A | 0.59 | 0.56 | 0.73 | 0.010 | 0.017 | | 0.0053 | 0.0021 | | | | | | | | | |
| Inventive Ex | 10B | 0.53 | 0.66 | 0.97 | 0.009 | 0.018 | 0.195 | 0.0070 | | | | | | | | | | |
| Inventive Ex | 10C | 0.60 | 1.25 | 0.54 | 0.014 | 0.023 | 0.125 | 0.0041 | | | | | | | | | | |
| Comparative Ex | 10D | 0.60 | 1.25 | 0.54 | 0.011 | 10.027 | 0.072 | 0.0041 | | | | | | | | | | |

Table 4

| Classification | Sample No. | C | Si | Mn | P | S | Al | N | B | Ti | Cr | Mo | Nb | V | Ni | Cu | Pb | Other |
|---|---|---|---|---|---|---|---|---|---|---|---|---|---|---|---|---|---|---|
| | | Ingredients of steel material (% by mass) | | | | | | | | | | | | | | | | |
| Inventive Ex | 11A | 0.58 | 1.42 | 0.53 | 0.012 | 0.032 | 0.130 | 0.0061 | | | | | | | | | | Zr: 0:001 |
| Comparative Ex | 11B | 0.60 | 1.53 | 0.41 | 0.016 | 0.018 | 0.102 | 0.0003 | | | | | | | | | | |
| Inventive Ex | 11C | 0.62 | 1.39 | 0.55 | 0.019 | 0.025 | 1.250 | 0.0053 | | | | | | | | | | REM: 0.002 |
| Comparative Ex | 11D | 0.59 | 1.57 | 0.58 | 0.01 | 0.062 | 0.155 | 0.0043 | | | | | | | | | | Mg: 0.001 |
| Inventive Ex | 11E | 0.69 | 0.58 | 10.85 | 0.010 | 0.013 | 0.200 | 0.0160 | | | | | | | | | | |
| Inventive Ex | 11F | 0.64 | 1.30 | 0.60 | 0.009 | 0.050 | 0.183 | 0.0042 | | | | | | | | | | |
| Comparative Ex | 11G | 0.59 | 2.02 | 0.45 | 0.011 | 0.025 | 0.119 | 0.0044 | | | | | 0.022 | | | | | Ca: 0.0009 |
| Comparative Ex | 11H | 0.74 | 0.20 | 0.67 | 0.0025 | 0.044 | 0.083 | 0.0160 | | | | | | | | | | Ca: 0.009 |
| Comparative Ex | 12A | 0.51 | 0.49 | 1.80 | 0.012 | 0.026 | 0.107 | 0.0021 | | | | | | | | | | Te: 0.0011 |
| Comparative Ex | 12B | 0.51 | 0.49 | 1.80 | 0.009 | 0.003 | 0.070 | 0.0021 | | | | | | | | | | Te: 0.0011 |
| Comparative Ex | 13A | 0.51 | 1.00 | 2.00 | 0.012 | 0.019 | 1.420 | 0.0055 | 0.0019 | | | | | | | | | |
| Comparative Ex | 13B | 0.61 | 2.92 | 0.21 | 0.018 | 0.012 | 0.110 | 0.0039 | | | | | | | | | | |
| Comparative Ex | 13C | 0.74 | 0.05 | 0.50 | 0.014 | 0.020 | 0.184 | 0.0048 | | | | | | 0.21 | | | | |
| Comparative Ex | 13D | 0.55 | 1.20 | 0.60 | 0.013 | 0.019 | 0.045 | 0.0048 | | | | | | 0.21 | | | | |
| Comparative Ex | 13E | 0.47 | 3.30 | 0.55 | 0.013 | 0.013 | 0.058 | 0.0053 | | | | | | | | | | |
| Comparative Ex | 14 | 0.78 | 0.20 | 0.67 | 0.025 | 0.044 | 0.166 | 0.0073 | | | | | | | | | | |

The rolled steels were cut, and cross sections thereof were polished. An average hardness was obtained by measuring the Vickers hardnesses of three points, positioned in a depth of 12.5mm from the surface, under a load of 10kg.

Meanwhile, disc-like samples of 45ϕ×15 mm were manufactured from these materials (i.e., the rolled steels). These disc-like samples were subjected to a machinability test under the conditions presented in Table 1. As described above, the machinability was evaluated by obtaining the maximum drilling rate (m/min) by which 1000mm of the total depth of the hole bored by the drill was acheved. This is a test that evaluates the tool lifetime.

Meanwhile, cylindrical samples of 17.5ϕ×52.5mm were manufactured from these materials. These cylindrical samples were subjected to induction hardening under conditions by which a portion within a depth of 2mm became a hardened layer. Afterwards, cross sections of the samples were cut and polished, and an average hardness of the surface layer was obtained by measuring the Vickers hardnesses of 10 points, positioned in a depth of 0.5mm from the surface layer, under a load of 300g. This is an index that evaluates the strength of the steel for induction hardening, in particular, when used for a variety of parts, such as a gear wheel.

The results of the average hardness, tool lifetime, and average hardness of surface layer after induction hardening of the rolled steels, which were obtained by the tests, are presented in Tables 5 and 6.

Table 5

| Classification | Sample No. | Hardness of steel material (HV) | Tool lifetime to rolled steel (m/min) | Surface layer hardness after induction hardening (HV) |
|---|---|---|---|---|
| Comparative Ex | 1A | 150 to 180 | 130 | 650 |
| Comparative Ex | 1B | 150 to 180 | 125 | 658 |
| Comparative Ex. | 1C | 150 to 180 | 110 | 665 |
| Comparative Ex. | 1D | 150 to 180 | 130 | 587 |
| | | | | |
| Inventive Ex. | 2A | 180 to 200 | 135 | 703 |
| Comparative Ex. | 2B | 180 to 200 | 115 | 703 |
| | | | | |
| Comparative Ex | 3A | 180 to 200 | 105 | 710 |
| Comparative Ex | 3B | 180 to 200 | 115 | 720 |
| Comparative Ex | 3C | 180 to 200 | 110 | 738 |
| Inventive Ex. | 3D | 180 to 200 | 110 | 715 |
| Comparative Ex. | 3E | 180 to 200 | 90 | 715 |
| | | | | |
| Inventive Ex. | 4A | 180 to 200 | 110 | 712 |
| Comparative Ex. | 4B | 180 to 200 | 80 | 712 |
| | | | | |
| Comparative Ex | 5A | 180 to 200 | 125 | 740 |
| Comparative Ex. | 5B | 180 to 200 | 105 | 740 |

(continued)

| Classification | Sample No. | Hardness of steel material (HV) | Tool lifetime to rolled steel (m/min) | Surface layer hardness after induction hardening (HV) |
|---|---|---|---|---|
| | | | | |
| Comparative Ex | 6A | 200 to 220 | 100 | 800 |
| Comparative Ex. | 6B | 200 to 220 | 80 | 747 |
| | | | | |
| Comparative Ex | 7A | 200 to 220 | 110 | 735 |
| Comparative Ex. | 7B | 200 to 220 | 90 | 735 |
| | | | | |
| Comparative Ex | 8A | 200 to 220 | 95 | 721 |
| Inventive Ex. | 8B | 200 to 220 | 100 | 705 |
| Comparative Ex | 8C | 200 to 220 | 100 | 765 |
| Inventive Ex. | 8D | 200 to 220 | 100 | 736 |
| Inventive Ex. | 8E | 200 to 220 | 100 | 739 |
| Comparative Ex | 8F | 200 to 220 | 100 | 761 |
| Comparative Ex | 8G | 200 to 220 | 100 | 725 |
| Inventive Ex. | 8H | 200 to 220 | 100 | 722 |
| Comparative Ex. | 8i | 200 to 220 | 75 | 760 |
| Comparative Ex. | 8J | 200 to 220 | 75 | 590 |

Table 6

| Classification | Sample No. | Hardness of steel material (HV) | Tool lifetime to rolled steel (m/min) | Surface layer hardness after induction hardening (HV) |
|---|---|---|---|---|
| Inventive Ex. | 9A | 200 to 220 | 90 | 742 |
| Comparative Ex. | 9B | 200 to 220 | 70 | 742 |
| | | | | |
| Inventive Ex. | 10A | 220 to 240 | 80 | 760 |
| Inventive Ex. | 10B | 220 to 240 | 80 | 719 |
| Inventive Ex. | 10C | 220 to 240 | 80 | 768 |
| Comparative Ex. | 10D | 220 to 240 | 60 | 768 |
| | | | | |

(continued)

| Classification | Sample No. | Hardness of steel material (HV) | Tool lifetime to rolled steel (m/min) | Surface layer hardness after induction hardening (HV) |
|---|---|---|---|---|
| Inventive Ex. | 11A | 240 to 260 | 60 | 755 |
| Comparative Ex | 11B | 240 to 260 | 55 | 768 |
| Inventive Ex. | 11C | 240 to 260 | 60 | 781 |
| Comparative Ex | 11D | 240 to 260 | 60 | 762 |
| Inventive Ex. | 11E | 240 to 260 | 60 | 824 |
| Inventive Ex. | 11F | 240 to 260 | 60 | 794 |
| Comparative Ex | 11G | 240 to 260 | 55 | 762 |
| Comparative Ex. | 11H | 240 to 260 | 35 | 853 |
| | | | | |
| Comparative Ex | 12A | 240 to 260 | 55 | 709 |
| Comparative Ex. | 12B | 240 to 260 | 40 | 709 |
| | | | | |
| Comparative Ex | 13A | 270 to 280 | 25 | 708 |
| Comparative Ex | 13B | 270 to 280 | 20 | 775 |
| Comparative Ex | 13C | 270 to 280 | 5 | 853 |
| Comparative Ex. | 13D | 270 to 280 | 5 | 736 |
| Comparative Ex. | 13E | 270 to 280 | 5 | 680 |
| Comparative Ex. | 14 | Season cracking formed in rolled steel | | |

The test results of inventive examples are compared with those of comparative examples at every hardness level of the rolled steels. This is because comparison is meaningless unless it is made between the steel materials having substantially the same hardness, since machinability is influenced by hardness. The same numeral in a sample number (Sample No.) indicates the same hardness level of the rolled steels.

Sample Nos. 1A and 1B are comparative examples. The tool lifetimes thereof are excellent In addition, the hardnesses of surface layer are HV600 or more; and therefore, these are steel materials that realize sufficient strength characteristics. Sample Nos. 1C and 1D are comparative examples. Sample No. 1C is an example of which the tool lifetime is decreased because the amount of Al is less than the range of the present invention. Sample No. 1D is an example of which the tool lifetime is excellent because the amount of Al is within the range of the present invention; however, the hardness of surface layer after induction hardening is lowered because the amount of C is less than the range of the present invention.

Sample No. 2A is an inventive example. The tool lifetime is excellent because the amount of Al is within the range of the present invention and Pb is included. In addition, the hardness of surface layer is HV600 or more; and therefore, this is a steel material that realizes sufficient strength characteristics. Sample No. 2B is a comparative example.

This is an example of which the tool lifetime is decreased because the amount of Al is less than the range of the present invention.

Sample Nos. 3A, 3B, 3C are comparative examples and 3D is an inventive example. The tool lifetimes thereof are excellent. In addition, the hardness of surface layers are HV600 or more; and therefore, these are steel materials that realize sufficient strength characteristics. Sample No. 3E is a comparative example. This is an example of which the tool lifetime is decreased because the amount of Al is less than the range of the present invention.

Sample No. 4A is an inventive example. The tool lifetime is excellent because the amount of Al is within the range of the present invention and Sb is also included. In addition, and the hardness of surface layer is HV600 or more; and therefore, this is a steel material that realizes sufficient strength characteristics. Sample No. 4B is a comparative example. This is an example of which the tool lifetime is decreased because the amount of Al is less than the range of the present invention.

Sample No. 5A is a comparative example. The tool lifetime is excellent because the amount of Al is within the range of the present invention and Bi is also included. In addition, and the hardness of surface layer is HV600 or more; and therefore, this is a steel material that realizes sufficient strength characteristics. Sample No. 5B is a comparative example. This is an example of which the tool lifetime is decreased because the amount of Al is less than the range of the present invention.

Sample No. 6A is a comparative example. The tool lifetime thereof is excellent In addition, the hardness of surface layer is HV600 or more; and therefore, this is a steel material that realizes sufficient strength characteristics. Sample No. 6B is a comparative example. This is an example of which the tool lifetime is decreased because the amount of Al is less than the range of the present invention.

Sample No. 7A is a comparative example. The tool lifetime is excellent because the amount of Al is within the range of the present invention and Sn is also included. In addition, the hardness of surface layer is HV600 or more; and therefore, this is a steel material that realizes sufficient strength characteristics. Sample No. 7B is a comparative example. This is an example of which the tool lifetime is decreased because the amount of Al is less than the range of the present invention.

Sample Nos. 8A, 8C, 8F, 8G are comparative examples and 8B, 8D, 8E, and 8H are inventive examples. The tool lifetimes thereof are excellent, and the hardnesses of surface layers are HV600 or more; and therefore, these are steel materials that realize sufficient strength characteristics. Sample No. 8i is a comparative example. This is an example of which the tool lifetime is decreased because the amount of Al is less than the range of the present invention. Sample No. 8J is a comparative example. This is an example of which the tool lifetime is decreased because the amount of Al is less than the range of the present invention.

Sample No. 9A is an inventive example. The tool lifetime is excellent because the amount of Al is within the range of the present invention and Zn is also included. In addition, the hardness of surface layer is HV600 or more; and therefore, this is a steel material that realizes sufficient strength characteristics. Sample No. 9B is a comparative example. This is an example of which the tool lifetime is decreased because the amount of Al is less than the range of the present invention.

Sample Nos. 10A, 10B, and 10C are inventive examples. The tool lifetimes are excellent. In addition, the hardnesses of surface layers are HV600 or more; and therefore, these are steel materials that realize sufficient strength characteristics. Sample No. 10D is a comparative example. This is an example of which the tool lifetime is decreased because the amount of Al is less than the range of the present invention.

Sample Nos. 11B, 11D, and 11G are comparative examples and 11A, 11C, 11E, 11F are inventive examples. The tool lifetime is excellent because the amount of Al is within the range of the present invention. In addition, the hardnesses of surface layers are HV600 or more; and therefore, these are steel materials that realize sufficient strength characteristics. Sample No. 11H is a comparative example. This is an example of which the tool lifetime is decreased because the amount of Al is less than the range of the present invention.

Sample No. 12A is a comparative example. The tool lifetime is excellent because the amount of Al is within the range of the present invention and Te is also included. In addition, the hardness of surface layer is HV600 or more; and therefore, this is a steel material that realizes sufficient strength characteristics. Sample No. 12B is a comparative example. This is an example of which the tool lifetime is decreased because the amount of Al is less than the range of the present invention.

Sample Nos. 13A, 13B, and 13C are comparative examples. The tool lifetimes are excellent In addition, the hardnesses of surface layers are HV600 or more; and therefore, these are steel materials that realize sufficient strength characteristics. Sample No. 13D is a comparative example. This is an example of which the tool lifetime is decreased because the amount of Al is less than the range of the present invention. Sample No. 13E is a comparative example. This is an example of which the tool lifetime is decreased due to the increase of the amount of hard inclusions because the content of Si is more than the range of the present invention.

Sample No. 14 is a comparative example. This is an example in which aging cracks are formed after rolling. This is because the toughness is degraded since the content of C is more than the range of the present invention.

**EP 2 381 003 B1**

INDUSTRIAL APPLICABILITY

The steel for induction hardening of the present invention can be very suitably used as a steel material that is applied to a process of manufacturing products, such as parts, in which the steel is subjected to processing treatment such as cutting, and then is subjected to induction hardening. In particular, the steel of the present invention can be very suitably used as a steel for the manufacture of parts, which are used for a gear wheel, a CVT or a CVJ for vehicles, or the like, via induction hardening.

**Claims**

1.  A steel for induction hardening consisting of, in terms of mass%,

    C: 0.40% or more to 0.75% or less;
    Si: 0.4% or more to 2.5% or less;
    Mn: 0.45% or more to 1.0% or less;
    S: 0.002% or more to 0.1% or less;
    Al: more than 0.10% to 3.0% or less;
    P: 0.030% or less;
    N: 0.035% or less;

    and optionally one or more selected from the group consisting of B: 0.0004% or more to 0.005% or less; Ti: 0.004% or more to 0.10% or less; Cr: 0.05% or more to 1.50% or less; Mo: 0.05% or more to 0.6% or less; Nb: 0.005% or more to 0.2% or less; V: 0.01% or more to 1.0% or less; Sb: 0.0005% or more to 0.0150% or less; Sn: 0.005% or more to 2.0% or less; Zn: 0.0005% or more to 0.5% or less; Te: 0.0003% or more to 0.2% or less; Bi: 0.005% or more to 0.5% or less; Pb: 0.005% or more to 0.5% or less; Zr: 0.0003% or more to 0.005% or less; REM: 0.0003% or more to 0.005% or less; Ni: 0.05% or more to 2.0% or less; and Cu: 0.01% or more to 2.0% or less;
    with the remainder being Fe and inevitable impurities,
    wherein the following expression (1) is satisfied:

    $$[\%Al] - (27/14) \times [\%N] - 0.001 > 0.10 \%; \qquad \text{expression (1)}$$

    wherein [%Al] and [%N] represent the amounts of Al and N, respectively, in the steel in terms of mass%.

2.  The steel for induction hardening according to claim 1, which comprises, in terms of mass%, C: 0.50% or more to 0.65% or less.

3.  The steel for induction hardening according to claim 1 or 2, which comprises, in terms of mass%, B: 0.0004% or more to 0.005% or less.

4.  The steel for induction hardening according to claim 1 or 2, which comprises, in terms of mass%, Ti: 0.004% or more to 0.10% or less.

5.  The steel for induction hardening according to claim 1 or 2, which comprises, in terms of mass%, either one or both of:

    Cr: 0.05% or more to 1.50% or less; and
    Mo: 0.05% or more to 0.6% or less.

6.  The steel for induction hardening according to claim 1 or 2, which comprises, in terms of mass%, either one or both of:

    Nb: 0.005% or more to 0.2% or less; and
    V: 0.01% or more to 1.0% or less.

7.  The steel for induction hardening according to claim 1 or 2, which comprises, in terms of mass%, one or more elements selected from the group consisting of:

Sb: 0.0005% or more to 0.0150% or less;
Sn: 0.005% or more to 2.0% or less;
Zn: 0.0005% or more to 0.5% or less;
Te: 0.0003% or more to 0.2% or less;
Bi: 0.005% or more to 0.5% or less; and
Pb: 0.005% or more to 0.5% or less.

8. The steel for induction hardening according to claim 1 or 2, which comprises, in terms of mass%, either one or both of:

Zr: 0.0003% or more to 0.005% or less; and
REM: 0.0003% or more to 0.005% or less.

9. The steel for induction hardening according to claim 1 or 2, which comprises, in terms of mass%, either one or both of:

Ni: 0.05% or more to 2.0% or less; and
Cu: 0.01% or more to 2.0% or less.

**Patentansprüche**

1. Ein Stahl für Induktionshärten, bestehend aus, bezogen auf Massen-%,

C: 0,40% oder mehr bis 0,75% oder weniger;
Si: 0,4% oder mehr bis 2,5% oder weniger;
Mn: 0,45% oder mehr bis 1,0% oder weniger;
S: 0,002% oder mehr bis 0,1% oder weniger;
Al: mehr als 0,10% bis 3,0% oder weniger;
P: 0,030% oder weniger;
N: 0,035% oder weniger;

und gegebenenfalls einem oder mehreren, ausgewählt aus der Gruppe bestehend aus B: 0,0004% oder mehr bis 0,005% oder weniger; Ti: 0,004% oder mehr bis 0,10% oder weniger; Cr: 0,05% oder mehr bis 1,50% oder weniger; Mo: 0,05% oder mehr bis 0,6% oder weniger; Nb: 0,005% oder mehr bis 0,2% oder weniger; V: 0,01% oder mehr bis 1,0% oder weniger; Sb: 0,0005% oder mehr bis 0,0150% oder weniger; Sn: 0,005% oder mehr bis 2,0% oder weniger; Zn: 0,0005% oder mehr bis 0,5% oder weniger; Te 0,0003% oder mehr bis 0,2% oder weniger; Bi: 0,005% oder mehr bis 0,5% oder weniger; Pb: 0,005% oder mehr bis 0,5% oder weniger; Zr: 0,0003% oder mehr bis 0,005% oder weniger; Seltenerdmetallen: 0,0003% oder mehr bis 0,005% oder weniger; Ni: 0,05% oder mehr bis 2,0% oder weniger; und Cu: 0,01% oder mehr bis 2,0% oder weniger;
wobei es sich bei dem Rest um Fe und unvermeidbare Verunreinigungen handelt, wobei der nachstehende Ausdruck (1) erfüllt ist:

$$[\%Al] - (27/14) \times [\%N] - 0{,}001 > 0{,}10\ \%; \qquad \text{Ausdruck (1)}$$

wobei [%Al] und [%N] die Mengen von Al bzw. N in dem Stahl, ausgedrückt als Massen-%, darstellen.

2. Der Stahl für Induktionshärten nach Anspruch 1, welcher, ausgedrückt als Massen-%, C: 0,50% oder mehr bis 0,65% oder weniger umfasst.

3. Der Stahl für Induktionshärten nach Anspruch 1 oder 2, welcher, ausgedrückt als Massen-%, B: 0,0004% oder mehr bis 0,005% oder weniger umfasst.

4. Der Stahl für Induktionshärten nach Anspruch 1 oder 2, welcher, ausgedrückt als Massen-%, Ti: 0,004% oder mehr bis 0,10% oder weniger umfasst.

5. Der Stahl für Induktionshärten nach Anspruch 1 oder 2, welcher, ausgedrückt als Massen-%, entweder eines oder beide aus:

Cr: 0,05% oder mehr bis 1,50% oder weniger; und
Mo: 0,05% oder mehr bis 0,6% oder weniger umfasst.

6. Der Stahl für Induktionshärten nach Anspruch 1 oder 2, welcher, ausgedrückt als Massen-%, entweder eines oder beide aus:

Nb: 0,005% oder mehr bis 0,2% oder weniger; und
V: 0,01% oder mehr bis 1,0% oder weniger umfasst.

7. Der Stahl für Induktionshärten nach Anspruch 1 oder 2, welcher, ausgedrückt als Massen-%, ein oder mehrere Elemente, ausgewählt aus der Gruppe bestehend aus:

Sb: 0,0005% oder mehr bis 0,0150% oder weniger;
Sn: 0,005% oder mehr bis 2,0% oder weniger;
Zn: 0,0005% oder mehr bis 0,5% oder weniger;
Te: 0,0003% oder mehr bis 0,2% oder weniger;
Bi: 0,005% oder mehr bis 0,5% oder weniger; und
Pb: 0,005% oder mehr bis 0,5% oder weniger umfasst.

8. Der Stahl für Induktionshärten nach Anspruch 1 oder 2, welcher, ausgedrückt als Massen-%, entweder eines oder beide aus:

Zr: 0,0003% oder mehr bis 0,005% oder weniger; und
Seltenerdmetalle: 0,0003% oder mehr bis 0,005% oder weniger umfasst.

9. Der Stahl für Induktionshärten nach Anspruch 1 oder 2, welcher, ausgedrückt als Massen-%, entweder eines oder beide aus:

Ni: 0,05% oder mehr bis 2,0% oder weniger; und
Cu: 0,01% oder mehr bis 2,0% oder weniger umfasst.

**Revendications**

1. Acier pour durcissement par induction consistant en, en termes de % en masse,

C : 0,40 % ou supérieur à 0,75 % ou inférieur ;
Si : 0,4 % ou supérieur à 2,5 % ou inférieur ;
Mn : 0,45 % ou supérieur à 1,0 % ou inférieur ;
S : 0,002 % ou supérieur à 0,1 % ou inférieur ;
Al : plus de 0,10 % à 3,0 % ou inférieur ;
P : 0,030 % ou inférieur ;
N : 0,035 % ou inférieur ;

et éventuellement un ou plusieurs choisis dans le groupe consistant en B : 0,0004 % ou supérieur à 0,005 % ou inférieur ; Ti : 0,004 % ou supérieur à 0,10 % ou inférieur ; Cr : 0,05 % ou supérieur à 1,50 % ou inférieur ; Mo : 0,05 % ou supérieur à 0,6 % ou inférieur ; Nb : 0,005 % ou supérieur à 0,2 % ou inférieur ; V : 0,01 % ou supérieur à 1,0 % ou inférieur ; Sb : 0,0005 % ou supérieur à 0,0150 % ou inférieur ; Sn : 0,005 % ou supérieur à 2,0 % ou inférieur ; Zn : 0,0005 % ou supérieur à 0,5 % ou inférieur ; Te : 0,0003 % ou supérieur à 0,2 % ou inférieur ; Bi : 0,005 % ou supérieur à 0,5 % ou inférieur ; Pb : 0,005 % ou supérieur à 0,5 % ou inférieur ; Zr : 0,0003 % ou supérieur à 0,005 % ou inférieur ; REM : 0,0003 % ou supérieur à 0,005 % ou inférieur ; Ni : 0,05 % ou supérieur à 2,0 % ou inférieur ; et Cu : 0,01 % ou supérieur à 2,0 % ou inférieur ;
avec le reste étant Fe et des impuretés invévitables,
dans lequel l'expression (1) suivante est satisfaite :

$$[\%Al] - (27/14) \times [\%N] - 0{,}001 > 0{,}10\ \% \ ; \text{ expression (1)}$$

dans laquelle [%Al] et [%N] représentent les quantités de Al et N, respectivement, dans l'acier en termes de % en masse.

2. Acier pour durcissement par induction selon la revendication 1, qui comprend, en termes de % en masse C : 0,50 % ou supérieur à 0,65 % ou inférieur.

3. Acier pour durcissement par induction selon la revendication 1 ou 2, qui comprend, en termes de % en masse, B : 0,0004 % ou supérieur à 0,005 % ou inférieur.

4. Acier pour durcissement par induction selon la revendication 1 ou 2, qui comprend, en termes de % en masse, Ti : 0,004 % ou supérieur à 0,10 % ou inférieur.

5. Acier pour durcissement par induction selon la revendication 1 ou 2, qui comprend, en termes de % en masse, soit l'un, soit les deux de :

   Cr : 0,05 % ou supérieur à 1,50 % ou inférieur ; et
   Mo : 0,05 % ou supérieur à 0,6 % ou inférieur.

6. Acier pour durcissement par induction selon la revendication 1 ou 2, qui comprend, en termes de % en masse, soit l'un, soit les deux de :

   Nb : 0,005 % ou supérieur à 0,2 % ou inférieur ; et
   V : 0,01 % ou supérieur à 1,0 % ou inférieur.

7. Acier pour durcissement par induction selon la revendication 1 ou 2, qui comprend, en termes de % en masse, un ou plusieurs éléments choisis dans le groupe consistant en :

   Sb : 0,0005 % ou supérieur à 0,0150 % ou inférieur ;
   Sn : 0,005 % ou supérieur à 2,0 % ou inférieur ;
   Zn : 0,0005 % ou supérieur à 0,5 % ou inférieur ;
   Te : 0,0003 % ou supérieur à 0,2 % ou inférieur ;
   Bi : 0,005 % ou supérieur à 0,5 % ou inférieur ; et
   Pb : 0,005 % ou supérieur à 0,5 % ou inférieur.

8. Acier pour durcissement par induction selon la revendication 1 ou 2, qui comprend, en termes de % en masse, soit l'un, soit les deux de :

   Zr : 0,0003 % ou supérieur à 0,005 % ou inférieur ; et
   REM : 0,0003 % ou supérieur à 0,005 % ou inférieur.

9. Acier pour durcissement par induction selon la revendication 1 ou 2, qui comprend, en termes de % en masse, soit l'un, soit les deux de :

   Ni : 0,05 % ou supérieur à 2,0 % ou inférieur ; et
   Cu : 0,01 % ou supérieur à 2,0 % ou inférieur.

## FIG. 1

EP 2 381 003 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2009007757 A
- JP 2007131871 A
- JP 2007107020 A
- JP 2006028598 A
- JP 2007016271 A
- JP 2001342539 A

### Non-patent literature cited in the description

- METHOD OF FINDING AND SELECTING WORKPIECE MATERIAL AND TOOL MATERIAL WITHOUT ERROR. The Nikkan Kogyo Shimbun, Ltd, 2007, 27
- HANDBOOK FOR HEAT TREATMENT. The Nikkan Kogyo Shimbun, Ltd, 2000, 569